(19) Europäisches Patentamt

European Patent Office

Office européen des brevets

(11) **EP 1 068 980 B1**

(12) **EUROPEAN PATENT SPECIFICATION**

(45) Date of publication and mention
of the grant of the patent:
**18.05.2005 Bulletin 2005/20**

(51) Int Cl.⁷: **B60K 15/073**, B60K 15/04

(21) Application number: **00114678.6**

(22) Date of filing: **07.07.2000**

(54) **Fuel tank**

Kraftstofftank

Réservoir de carburant

(84) Designated Contracting States:
**DE FR GB**

(30) Priority: **16.07.1999 JP 20374699**
**17.09.1999 JP 26293899**
**16.11.1999 JP 32519699**

(43) Date of publication of application:
**17.01.2001 Bulletin 2001/03**

(73) Proprietor: **HONDA GIKEN KOGYO KABUSHIKI KAISHA**
**Minato-ku Tokyo (JP)**

(72) Inventors:
 • **Souma, Satoshi**
**Wako-shi, Saitama-ken (JP)**
 • **Okumoto, Hidefumi**
**Wako-shi, Saitama-ken (JP)**
 • **Kondo, Osamu**
**Wako-shi, Saitama-ken (JP)**
 • **Sasaki, Nobuyuki**
**Wako-shi, Saitama-ken (JP)**
 • **Sugiyama, Mitsuo**
**Wako-shi, Saitama-ken (JP)**
 • **Fujino, Ryuji**
**Wako-shi, Saitama-ken (JP)**

(74) Representative: **Liska, Horst, Dr. et al**
**Weickmann & Weickmann**
**Patentanwälte**
**Postfach 860 820**
**81635 München (DE)**

(56) References cited:
**EP-A- 0 943 476**          **DE-A- 1 925 719**
**DE-A- 3 711 781**          **DE-U- 29 824 173**
**JP-A- 11 072 054**          **US-A- 5 538 039**

**Description**

BACKGROUND OF THE INTENTION

1. Field of the Invention

The present invention relates to a fuel tank for use in a car and, in particular, to a fuel tank comprising a breather pipe having one end communicating with the upper space of a tank main body, with the other end thereof communicating with the oil support port of a filler pipe according to the preamble part of claim 1.

2. Description of the Related Art

Such a fuel tank is known from document DE 37 11 781 A1. The breather pipe of this known fuel tank, in its downwardly curved portion, is connected to the tank main body via a check valve. This check valve serves to allow liquid fuel within the breather pipe to return to the tank main body and to prevent the breather pipe from being clogged up with liquid fuel.

Document US 5 538 039 A discloses a fuel tank with a tank main body, a filler pipe and a breather pipe. The breather pipe of the latter known fuel tank comprises a chamber which is formed as a widening of the breather pipe passage. The chamber has a volume that exceeds the fuel volume which can be forced upwards in the breather pipe during filling. A drainage hole in a tube portion proximate the bottom of the almost vertically arranged chamber allows the return of fuel which has collected in the chamber.

Further prior art is discussed in the following:

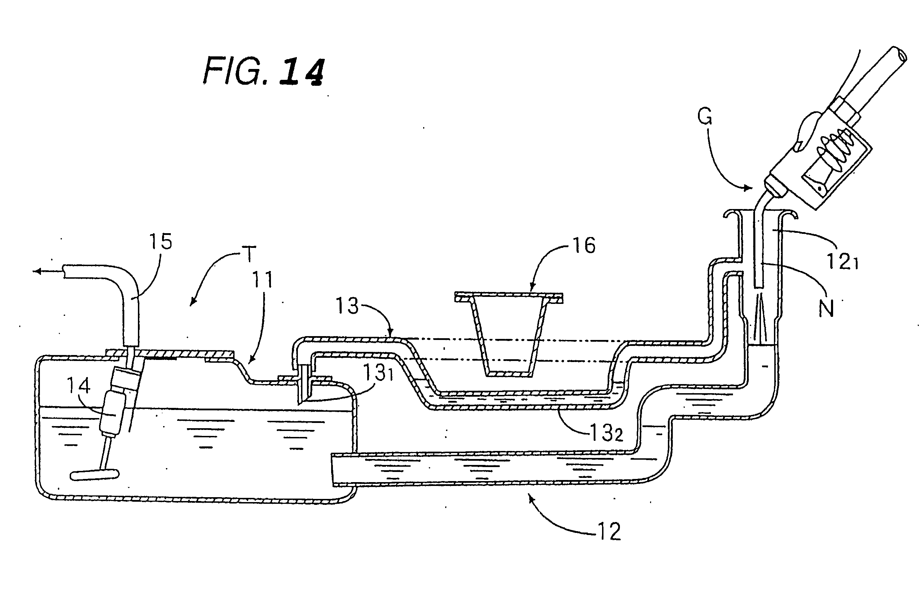

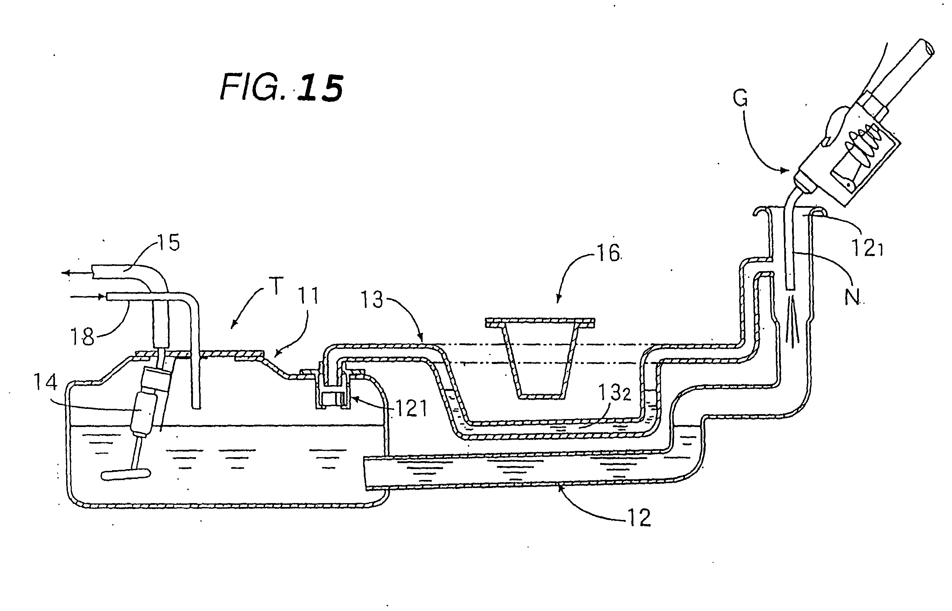

Now, Figs. 14 and 15 respectively show conventional fuel tanks T for use in a car. The fuel tank T comprises a tank main body 11 carried on the lower surface of the rear portion of a car body and a filler pipe 12 with one end thereof connected to the lower space of the tank main body 11, while the filler pipe 12 rises obliquely toward the lateral side of the car body and includes an oil support port $12_1$ which is formed in the other end of the filler pipe 12 and is opened on the side surface of the car body. The upper space of the tank main body 11 is connected to the oil support port $12_1$ of the filler pipe 12 through a breather pipe 13. Further, in case of Fig. 15, in the end portion of the breather pipe 13 that extends into the upper space of the tank main body 11, there is disposed a float valve 121 which, when the liquid surface of fuel rises up to a fuel-filled-up liquid surface F, can be closed to thereby close the breather pipe 13.

According to the structure of Fig. 14, in case where fuel or oil is supplied from the oil supply port $12_1$ of the filler pipe 12 using an oil supply gun G, as the liquid surface of the fuel of the tank main body 11 rises, the air in the upper space of the tank main body is exhausted from the breather pipe 13 through the oil supply port $12_1$ to the outside. In case where a communicating port $13_1$ formed in the breather pipe 13 sinks under the fuel liquid surface of the tank main body 11 due to the rising of the fuel liquid surface of the tank main body 11, the air in the upper space of the tank main body 11 is closed there to thereby regulate the rising of the fuel liquid surface, with the result that the liquid surface of fuel within the filler pipe 12 is raised by fuel supplied from the oil supply gun G. And, the fuel liquid surface within the filler pipe 12 reaches the height of a nozzle N provided in the oil supply gun G, the automatic stop mechanism of the oil supply gun G is operated to stop the supply of the fuel. While an engine is in operation, the fuel within the tank main body 11 is supplied through a feed pipe 15 to the engine by a fuel pump 14 of an in-tank type.

In addition, according to the structure of Fig.. 15, in case where oil or fuel is supplied from the oil support port $12_1$ of the filler pipe 12 using an oil supply gun G, as the fuel liquid surface of the tank main body 11 rises, the air existing in the upper space of the tank main body 11 is discharged to the outside through the float valve 121 which is held in its open state, the breather pipe 13 and the oil support port $12_1$ of the filler pipe 12. In case where the fuel liquid surface of the tank main body 11 reaches the fuel-filled-up liquid surface F to thereby close the float valve 121, the breather pipe 13 is closed, the air existing in the upper space of the tank main body 11 is confined to thereby regulate the rising of the fuel liquid surface, so that the fuel liquid surface within the filler pipe 12 is caused to rise by the fuel supplied from the oil supply gun G. And, in case where the fuel liquid surface within the filler pipe 12 reaches the height of a nozzle N provided in the oil supply gun G, the automatic stop mechanism of the oil supply gun G is operated to thereby cause the supply of the fuel to stop. While an engine is running, the fuel within the tank main body 11 is supplied to the engine by a fuel pump 14 of an in-tank type through a feed pipe 15.

By the way, as shown in Figs. 14 and 15, when there exists an obstacle such as a car body frame 16 between the tank main body 11 and oil supply port $12_1$, in some cases, the intermediate portion of the breather pipe 13 is curved downwardly in order to avoid the interference of the breather pipe 13 with such obstacle. However, in case where, in the intermediate portion of the breather pipe 13, there is formed a downwardly curved portion $13_2$ which is curved in the downward direction, there is a possibility that fuel, that is, the liquified version of fuel vapor, can be stored in the downwardly curved portion $13_2$, or, due to vibrations caused by the running operation of the car, the fuel within the fuel tank main body 11 can be made to flow into the breather pipe 13 and can be thereby stored in the downwardly curved portion $13_2$.

In case where the breather pipe 13 is clogged up with the fuel stored in the downwardly curved portion $13_2$, in the oil supply operation by the oil supply gun G, the air in the upper space of the tank main body 11 is disabled from being exhausted through the breather pipe 13, so that the fuel liquid surface within the filler pipe 12 is caused to rise due to the fuel disabled from flowing into the tank main body 11; and, therefore, there arises a problem the automatic stop mechanism of the oil supply gun G can be actuated before the tank main body 11 is filled with the fuel. Also, in case where the pressure of the upper portion of the tank main body 11 is raised suddenly due to the pressure of the fuel to be supplied from the oil supply gun G, there is a fear that the fuel stored in the downwardly curved portion $13_2$ of the breather pipe 13 can be injected into the oil supply port $12_1$ of the filler pipe 12. In this case as well, there arises a problem that, before the tank main body 11 is filled with the fuel, the automatic stop mechanism of the oil supply gun G can be actuated due to the injected fuel.

SUMMARY OF THE INVENTION

The present invention aims at eliminating the above drawbacks found in the conventional fuel tank. Accordingly, it is an object of the invention to provide a fuel tank which can prevent fuel stored in the downwardly curved portion of the breather pipe of the fuel tank from interrupting oil supply to be executed by an oil supply gun regardless of the fuel level within the fuel tank.

To achieve the above object, according to the invention, there is provided a fuel tank, including: a tank main body for storing fuel therein; a filler pipe having one end communicating with the lower space of the tank main body and the other end formed with an oil supply port into which an oil supply gun can be inserted; a breather pipe having one end communicating with the upper space of the tank main body and the other end communicating with the oil supply port of the filler pipe, the breather pipe including a downwardly curved portion formed in the intermediate portion thereof; and a pump (jet pump) returning fuel stored in the downwardly curved portion of the breather pipe to the tank main body through a stored fuel suction pipe.

According to the above structure, even in case where fuel is stored in the downwardly curved portion of the breather pipe due to the liquefaction of fuel vapor or due to the oscillatory motion of the fuel tank, the thus stored fuel is returned back to the tank main body by the pump. Thanks to this, there is eliminated a fear that, in the fuel supply operation, the upper space of the tank main body can be hermetically closed by the thus stored fuel to thereby raise the fuel liquid surface within the filler pipe, and there is also eliminated a fear that, in the fuel supply operation, the fuel stored in the downwardly curved portion of the breather pipe can be pushed out to the oil supply port of the filler pipe due to an increase in the pressure of the upper space of the tank main body. This makes it possible to prevent the unnecessary operation of the automatic stop mechanism of the oil supply gun.

In addition, the fuel tank according to a preferred embodiment of the invention may further include: a float valve disposed on one end of the breather pipe, the float valve being closed, when a fuel liquid surface within the tank main body reaches a fuel-filled-up surface, wherein the height of a fuel injection port formed in the pump is set substantially coincident with the height of the fuel-filled-up surface.

According to the above structure, since the height of the fuel injection port formed in the jet pump is set almost coincident with the height of the fuel-filled-up surface, when supplying oil or fuel while the jet pump is not in operation, it is possible to prevent the fuel from flowing reversely from the fuel injection port through the stored fuel suction pipe to the downwardly curved portion of the breathe pipe, so that early operation of the automatic stop mechanism of the oil supply gun due to closing of the breather pipe can be prevented. Also, while the float valve is closed, the upper space of the tank main body and filler pipe are prevented from communicating witch each other through the fuel injection port of the jet pump, stored fuel suction pipe and breather pipe, so that a fuel liquid surface within the filler pipe is raised to thereby be able to positively operate the automatic stop mechanism of the oil supply gun.

Moreover, the fuel tank according to a preferred embodiment of the invention may further include: a float valve disposed on one end of the breather pipe, the float valve being closed, when a fuel liquid surface within the tank main body reaches a fuel-filled-up surface,. and a check valve disposed on the stored fuel suction pipe, the check valve being opened when the pump generates a given suction force to thereby allow suction of the air existing in the upper space of the tank main body.

According to the above structure, since, on the stored fuel suction pipe, there is disposed a check valve which, when the jet pump generates a given suction force, can be opened to thereby allow suction of the air existing in the upper space of the tank main body, when the jet pump is actuated in a state where the fuel liquid surface reaches the fuel-filled-up liquid surface and the float valve is thereby closed, the check valve is opened to thereby be able to prevent an excessive negative pressure' from occurring in the breather pipe. This disables the fuel liquid surface within the filler pipe from rising. Therefore, not only when the fuel cap is opened, the fuel can be prevented from being jetted out from the oil support port of the filler pipe, but also when the fuel cap is not closed completely, there is eliminated a possibility that a large quantity of air can be sucked from the oil supply port into the tank main body, so that deterioration of the canister can be prevented.

Further, the fuel tank according to a preferred embodiment of the invention may further include: a float valve disposed on one end of the breather pipe, the float valve being closed, when a fuel liquid surface within the tank main body reaches a fuel-filled-up surface, wherein, when the pump is actuated while the float valve is closed, the air existing in the upper portion of the tank main body can be sucked into the breather pipe.

According to the above structure, when the jet pump is actuated while the float valve is closed, the air existing in the upper portion of the tank main body can be sucked into then breather pipe, which makes it possible to prevent an excessive negative pressure from occurring in the breather pipe. This disables the fuel liquid surface within the filler pipe from rising. Thanks to this, not only, when the fuel cap is opened, the fuel can be prevented from being jetted out from the oil support port of the filler pipe, but also, when the fuel cap is not closed completely, there is eliminated a possibility that a large quantity of air can be sucked from the oil support port into the tank main body, so that deterioration of the canister can be controlled.

In addition, the fuel tank according to a preferred embodiment of the invention may further include: a float valve disposed on one end of the breather pipe, the float valve being closed, when a fuel liquid surface within the tank main body reaches a fuel-filled-up surface, wherein the intermediate portion of the stored fuel suction pipe is formed so as to communicate with the float valve, and the closing of the float valve is regulated by a negative pressure applied onto the stored fuel suction pipe due to operation of the pump.

According to the above structure, the intermediate portion of the stored fuel suction pipe communicates with the float valve, and closing of the float valve can be regulated by the negative pressure applied onto the stored fuel suction pipe due to operation of the jet pump. Thanks to this, when the jet pump is operated in a state where the fuel liquid surface , reaches the fuel-filled-up liquid surface and the float valve is thereby closed, the float valve can be forcibly opened to thereby prevent an excessive negative pressure from occurring in the breather pipe. This can disable the fuel liquid surface within the filler pipe from rising. Therefore, not only, when the fuel cap is opened, the fuel can be prevented from being jetted out from the oil support port of the filler pipe, but also, when the fuel cap is not closed completely, there is eliminated a possibility that a large quantity of air can be sucked from the oil support port into the tank main body, so. that deterioration of the canister can be controlled.

In addition, according to a further preferred embodiment of the invention, there is provided a fuel tank with all features of claim 1, additionally including: a firs chamber communicating with the downwardly curved portion of the breather pipe; a second chamber communicating with the first chamber; a check valve for allowing the movement of fuel from the first chamber to the second chamber and preventing the movement of the fuel from the second chamber to the first chamber; wherein said pump is a jet pump disposed on return pipes respectively for returning the surplus fuel of an engine to the tank main body, the jet pump being capable of sucking fuel existing within the second chamber.

According to the above structure, even in case where fuel is stored in the downwardly curved portion of the breather pipe due to liquefaction of fuel vapor or due to oscillation of the fuel tank, the fuel is allowed to flow from the first chamber through the check valve into the tank main body, where the fuel can be sucked by the jet pump and returned into the tank main body. Therefore, there are prevented the possibility that, in the fuel supply operation, the upper space of the tank main body can be closed by the above-mentioned stored fuel to thereby raise the fuel liquid surface within the filler pipe, and the possibility that, in the fuel supply operation, the fuel stored in the downwardly curved portion of the breather pipe can be pushed out to the oil supply port of the filler pipe due to an increase in the pressure of the upper space of the tank main body. This can avoid the possibility that the automatic stop mechanism of the oil supply gun can be operated unnecessarily.

BRIEF DESCRIPTION OF THE DRAWINGS

Fig. 1 is a schematic view of a fuel tank according to a first embodiment of the invention;
Fig. 2 is a schematic view of a fuel tank according to a second embodiment of the invention;
Fig. 3 is a schematic view of a fuel tank for explaining the displacement of a jet pump according to the second embodiment;
Fig. 4 is a schematic view of a fuel tank according to a third embodiment of the invention;
Fig. 5 is a schematic view of a modification of the fuel tank according to the third embodiment;
Fig. 6 is an enlarged view of a float valve employed in a fuel tank according to an embodiment of the invention;
Fig. 7 is an enlarged view of a first modification of the float valve employed in the embodiment of Fig. 6;
Fig. 8 is an enlarged view of a second modification of the float valve employed in the embodiment of Fig. 6;
Fig. 9 is an enlarged view of another modification of the float valve;
Fig. 10 is a schematic view of a fuel tank according to a fourth embodiment of the invention;
Fig. 11 is a section'view taken along the direction of an arrow XII shown in Fig. 10;
Fig. 12 is a section view taken along the line XIII-XIII shown in Fig. 11;
Fig. 13 is a section view taken along the line XIV-XIV shown in Fig. 11; and
Figs. 14 and 15 are schematic views of a conventional fuel tank.

## DETAILED DESCRIPTION OF THE PREFERRED EMBODIMENTS

Now, description will be given below of a mode for carrying out the invention with reference to the preferred embodiments of to the invention respectively shown in the accompanying drawings. By the way, in the first to eighth preferred embodiments of the invention which will be discussed hereinbelow, the same components as those employed in the previously-described conventional fuel tank shown in Fig. 14 and 15 are given the same designations and thus the duplicate description thereof is omitted.

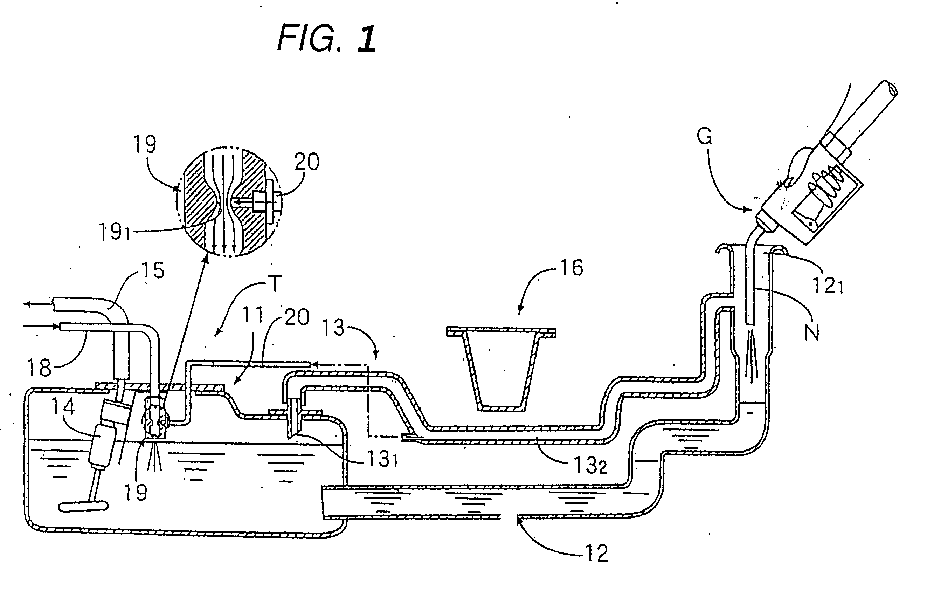

Now, Fig. 1 shows the first embodiment of the invention, in which, using a jet pump 19 disposed on the downstream end of a return pipe 18 which is used to return surplus fuel from a fuel injection system in an engine to the tank main body 11, the fuel stored in the downwardly curved portion $13_2$ of the breather pipe 13 can be sucked into the tank main body 11. The jet pump 19 includes a Venturi nozzle $19_1$. There is also disposed a fuel suction pipe 20 whose one end is connected to the downwardly curved portion $13_2$ of the breather pipe 13. And, the other end of the fuel suction pipe 20 is connected to the Venturi nozzle $19_1$ of the jet pump 19.

Thus, in case where, with the engine running, the fuel is supplied from the return pipe 18 to the jet pump 19, a negative pressure is generated due to the fuel passing through the Venturi nozzle $19_1$ of the jet pump 19, so that the fuel stored in the downwardly curved portion $13_2$ of the breather pipe 13 can be sucked into the tank main body 11 through the fuel suction pipe 20 due to the'thus generated negative pressure. Thanks to this, when supplying oil or fuel using the oil supply gun G, the fuel can be prevented from staying in the downwardly curved portion $13_2$ of the breather pipe 13, thereby permitting the smooth supply of the fuel into the tank main body 11, which makes it possible to avoid the unnecessary operation of the automatic stop mechanism of the oil supply gun G.

By the way, instead of disposing the jet pump 19 on the return pipe 18, the jet pump 19 can also be disposed on the feed pipe 15. In this case, there can be obtained a similar effect. Also, the fuel stored in the downwardly curved portion $13_2$ of the breather pipe 13 can also be removed by sucking it using a pump which includes a drive source such as a motor.

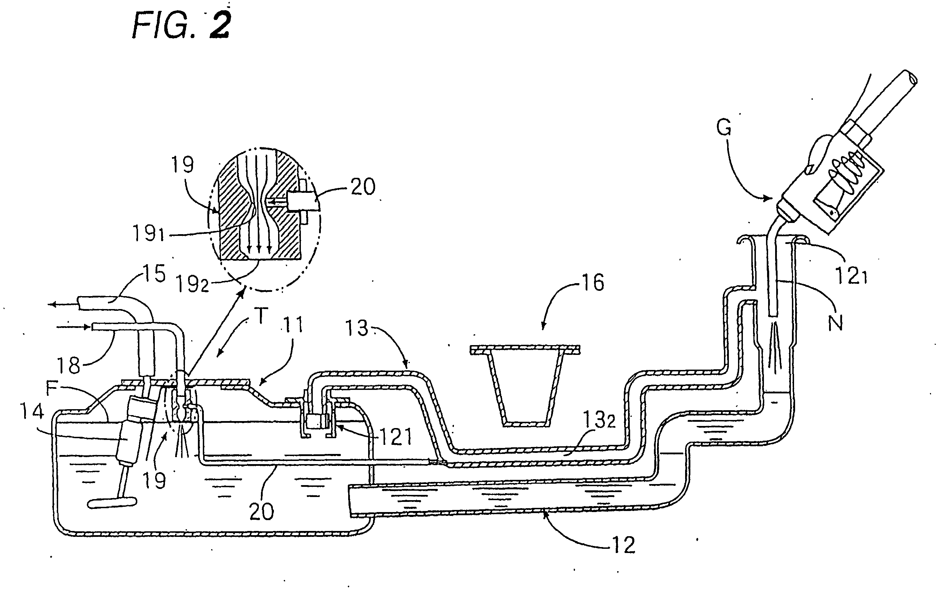

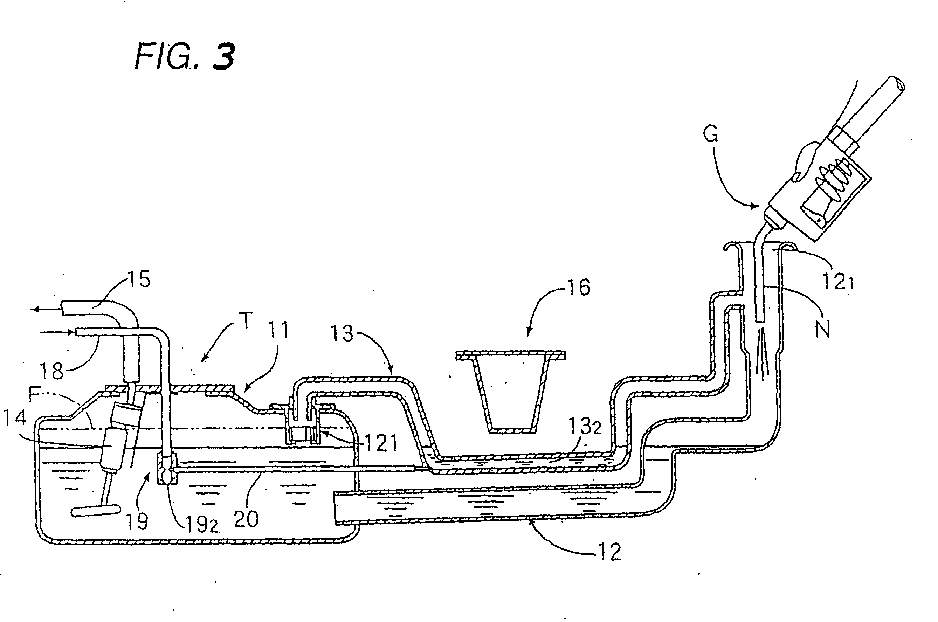

Now, description will be given below of the second embodiment of the invention with reference to Figs. 2 and 3.

In the end portion of the breather pipe 13 that extends into the upper space of the tank main body 11, there is disposed a float valve 121 which, when the liquid surface of fuel rises up to a fuel-filled-up liquid surface F, can be closed to thereby close the breather pipe 13 as shown in Fig. 2. Further, as well as the second embodiment, there is disposed the jet pump 19 in the downstream end of the return pipe 18, and the jet pump 19 is connected to the downwardly curved portion $13_2$ of the breather pipe 13 by the stored fuel suction pipe 20, whereby fuel stored in the downwardly curved portion $13_2$ can be sucked through the stored fuel suction pipe 20 into the tank main body 11 by a negative pressure generated by the jet pump 19.

In the fourth embodiment, the fuel injection port $19_2$ of a jet pump 19 is disposed such that its height is set so as to coincide almost with the height of the fuel-filled-up liquid surface F of a tank main body 11. Thus, even in case where fuel is stored in the downwardly curved portion $13_2$ of a breather pipe 13, the fuel stored in the downwardly curved portion $13_2$ of a breather pipe 13 can be sucked into the interior portion of the tank main body 11 through a stored fuel discharge pipe 20 due to the negative pressure that is generated when surplus fuel to be returned from an engine passes through the Venturi nozzle $19_1$ of the jet pump 19. This prevents the fuel from being stored in the downwardly curved portion $13_2$ of the breather pipe 13 in the oil supply operation to thereby prevent the early rising of a fuel liquid surface within a filler pipe 12. Due to this, there is eliminated the possibility that the automatic stop mechanism of an oil supply gun G can be operated before the tank main body 11 is filled with fuel.

As shown in Fig. 3, assuming that the fuel injection port $19_2$ of the jet pump 19 is disposed at a position lower than the fuel-filled-up liquid surface F, in the oil supply operation with the jet pump 19 not in operation, as the fuel liquid surface rises, the fuel is allowed to flow reversely from the fuel injection port $19_2$ of the jet pump 19 through the stored fuel suction pipe 20 into the downwardly curved portion $13_2$ of the breather pipe 13 to thereby close the breather pipe 13, which in turn causes the fuel liquid surface within the filler pipe 12 to rise, so that the automatic stop mechanism of the oil supply gun G can be operated early. On the other hand, assuming that the fuel injection port $19_2$ of the jet pump 19 is disposed at a position higher than the fuel-filled-up liquid surface F, even in case where the fuel liquid surface reaches the fuel-filled-up liquid surface F and'the float valve 121 is thereby closed, the upper space of the tank main body 11 and the filler pipe 12 are kept in communication with each other through the fuel injection port $19_2$ of the jet pump 19, stored fuel suction pipe 20 and breather pipe 13 to thereby disable the fuel liquid surface within the filler pipe 12 from rising, so that the automatic stop mechanism of the oil supply gun G is prevented against operation.

Further, as shown in Fig. 3, in case where the jet pump 19 is actuated in a state where the float valve 121 is closed, the fuel within the tank main body 11 is sucked into the jet pump 19 through the filler pipe 12,. breather pipe 13 and stored fuel suction pipe 20, so that the fuel liquid surface within the filler pipe 12 rises up to the oil supplyport $12_1$. Therefore, in this state, in case where the fuel cap is opened in error, there is a possibility that the fuel can be jetted out from the oil supply

port $12_1$. Also, when the fuel cap is not closed completely, there is no possibility that the fuel liquid surface within the filler pipe 12 can be raised; but, because the open air is sucked through the oil supply port $12_1$, breather pipe 13 and stored fuel suction pipe 20 into the tank main body 11 by the jet pump 19, there arises a problem that the internal pressure of the tank main body 11 can be increased or the quantity of generation of fuel vapor can be increased, which causes the canister to deteriorate early.

However, according to the second embodiment of the invention, since the fuel injection port $19_2$ of the jet pump 19 is disposed such that its height is set so as to coincide almost with the height of the fuel-filled-up liquid surface F of the tank main body 11, both of the above-mentioned two problems can be solved.

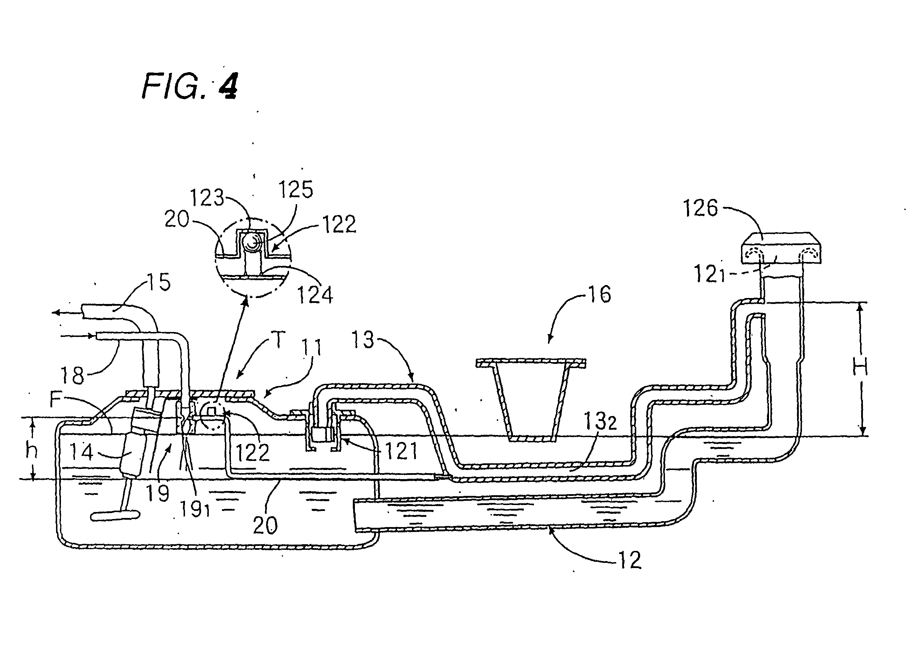

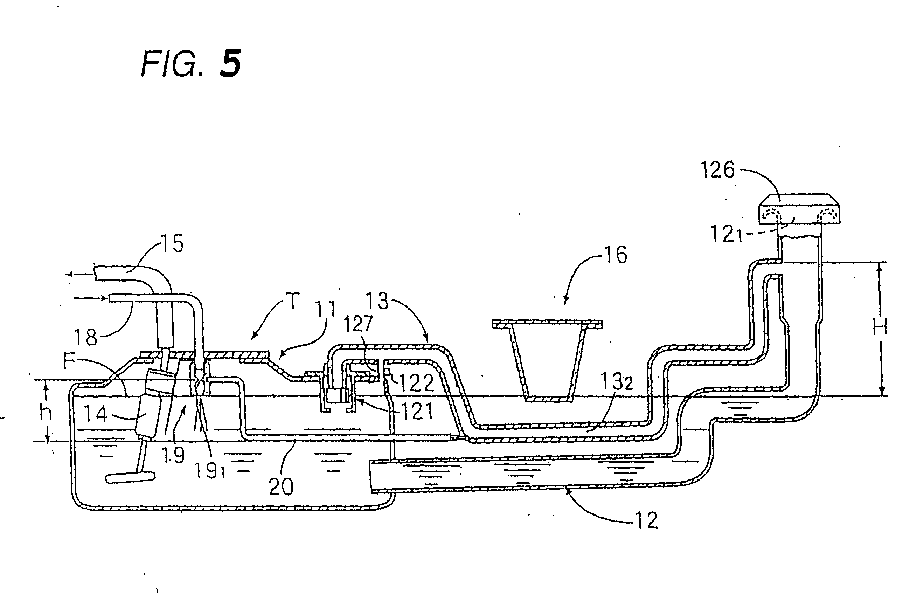

Now, description will be given below of the third embodiment of the invention with reference to Figs. 4 and 5.

In the third: embodiment, in the stored fuel suction pipe 20 which is exposed to the upper space of the tank main body 11, there is disposed a check valve 122. The check valve 122 includes a check ball 125 which is energized by a spring 124 so as to be able to close a valve port 123 that is in communication with the upper space of the tank main body 11; and, the check valve 122 can be opened when a negative pressure generated by the jet pump 19 is applied onto the stored fuel suction pipe 20. And, the valve opening pressure p (negative pressure) of the check valve 122 is set to establish the following relation.

$$\gamma h < p < \gamma H$$

where the height of the Venturi nozzle $19_1$ of the jet pump 19 with the downwardly curved portion $13_2$ of the breather pipe 13 as the reference thereof is expressed as h, the height of the connecting portion between the filler pipe 12 and breather pipe 13 with the fuel-filled-up liquid surface F of the tank main body 11 as the reference thereof is expressed as H, and the specific weight of the fuel is expressed as $\gamma$.

Thus, when the jet pump 19 is operated to suck the fuel stored in the downwardly curved portion $13_2$ of the breather pipe 13, because the valve opening pressure p of the check valve 122 is set larger than $\gamma h$, the check valve 122 can be kept closed. Therefore, the jet pump 19 is able to suck the fuel stored in the downwardly curved portion $13_2$ of the breather pipe 13 with no trouble.

Also, when the jet pump 19 is operated in a state where the fuel liquid surface reaches the fuel-filled-up liquid surface F and the float valve 121 is thereby closed, the fuel liquid surface within the filler pipe 12 is raised by the negative pressure generated within the breather pipe 13 but, because the valve opening pressure p of the check valve 122 is set smaller than $\gamma H$,

the fuel liquid surface within the filler pipe 12 can rise only to a position lower than the connecting portion between the filler pipe 12 and breather pipe 13. Therefore, in this state, even in case where a fuel cap 126 is opened in error, there is no fear that the fuel can be jetted out from the oil support port $12_1$.

And,. when the fuel cap 126 is not closed completely, since the open air is sucked into the tank main body 11 through the oil support port $12_1$, breather pipe 13 and stored fuel suction pipe 20 by the jet pump 19, there is no possibility that the fuel liquid surface within the filler pipe 12 can rise; however, there arises a problem that the open air can be sucked from the oil support port $12_1$ into the tank main body 11 to thereby increase the internal pressure of the tank main body 11 or to thereby increase the quantity of generation of the fuel vapor so as to cause early deterioration of the canister. On the other hand, according to the second embodiment of the invention, in case where the negative pressure of the stored fuel suction pipe 20 increases, the check valve 122 is opened to thereby regulate the suction of the open air from the oil support port $12_1$, thereby being able to solve the above-mentioned problem.

Fig. 5 shows the modification of the third embodiment. In Fig. 5, the check'valve 122 having the same structure as that of Fig. 4 is disposed on a communication path 127 formed between the fuel main tank 11 and the breather pipe 13; instead of the stored fuel suction pipe 120. The check valve 122 can be opened when the negative pressure within the communication path 127, that is, the breather pipe 123 is lower than a predetermined value. The valve opening pressure p of the check valve 122 is set to establish the following relation.

$$p < \gamma H$$

Accordingly, the fuel liquid surface within the filler pipe 12 can rise only to a position lower than the connecting portion between the filler pipe 12 and breather pipe 13. That is, in the present modification as well, there can be obtained similar operation and effects to the previously described embodiment shown in Fig. 4.

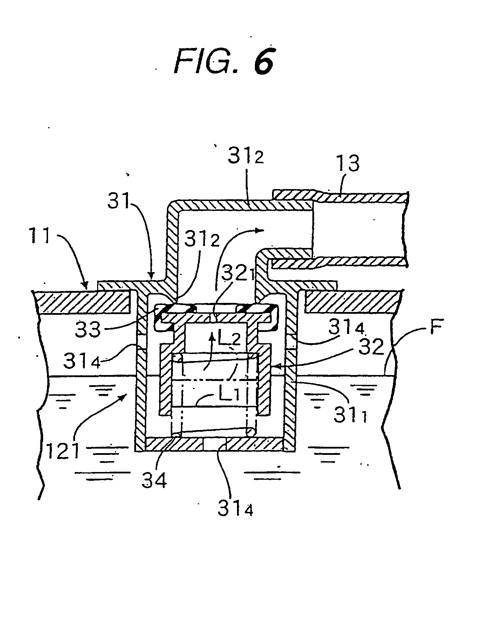

Now, description will be given below of a float valve for use in an embodiment of the invention with reference to Fig. 6.

In the.present embodiment, a float valve 121 comprises a valve housing 31 which is removably supported on the upper wall of the tank main body 11. The valve housing 31 includes a float chamber $31_1$ formed so as to face the upper space of the tank main body 11, a valve seat $31_2$ formed in the upper portion of the float chamber $31_1$, and a joint $31_3$ formed upwardly of the valve seat $31_2$ and connected to the breather pipe 13. In the interior portion of the float chamber $31_1$, there is stored a bottomed cylindrical-shaped float 32 which has a closed upper surface and can be moved up and down;

and, on the upper end of the float 32, there is disposed a valve body 33 which can be seated on the valve seat $31_2$. Between the float 32 and the bottom wall of the float chamber $31_1$, there is disposed a spring 34 which is used to support a part of the weight of the float 32. And, in the float chamber $31_1$, there are formed a plurality of communicating holes $31_4$ --- ; and, in the upper wall of the float 32, there is formed a small hole $32_1$.

In the thus structured embodiment, when supplying oil or fuel, in case where, as the fuel liquid surface within the tank main body 11 rises, the float 32 of the float valve 21 rises in the interior portion of the float chamber $31_1$ and thus the fuel liquid surface reaches the fuel-filled-up surface F, the valve body 33 of the float 21 is seated on the valve seat $31_2$ to thereby close the breather pipe 13, which in turn raises the fuel liquid surface within the filler pipe 12. At the then time, although the air existing within the float 32 flows out to the breather pipe 13 side through the small hole $32_1$ formed in the upper wall of the float 32, the flow quantity of. the air is very small and, therefore, there is no fear that the rising of the fuel liquid surface within the filler pipe 12 can be interfered by such flow of the air.

In case where the jet pump 19 is actuated while the float valve 21 is closed, the internal pressures of the stored fuel suction pipe 20 and breather pipe 13 turn negative, so that the air confined to the interior portion of the float 32 through the small hole $32_1$ formed in the upper wall of the float 32 of the closed float valve 121 is sucked out into the interior portion of the breather pipe 13. In response to this, the fuel liquid surface in the interior portion of the float 32 rises from $L_1$ to $L_2$ and thus the under-liquid volume of the float 32 is decreased to thereby reduce the buoyancy of the float 32, so that the float 32 sinks down and thus the valve body 33 is separated from the valve seat $31_2$, thereby causing the float valve 121 to open. As a result of this, the interior portion of the breather pipe 13 is brought into communication with the upper space of the tank main body 11 to'thereby stop the generation of the negative pressure. This not only prevents the fuel liquid surface within the filler pipe 12 from rising, but also, when the fuel cap 126 is not closed completely, suction of a large quantity of air into the tank main body 11 can be prevented. That is, in the present embodiment as well, there can be obtained similar operation and effects to the previously described third,embodiment.

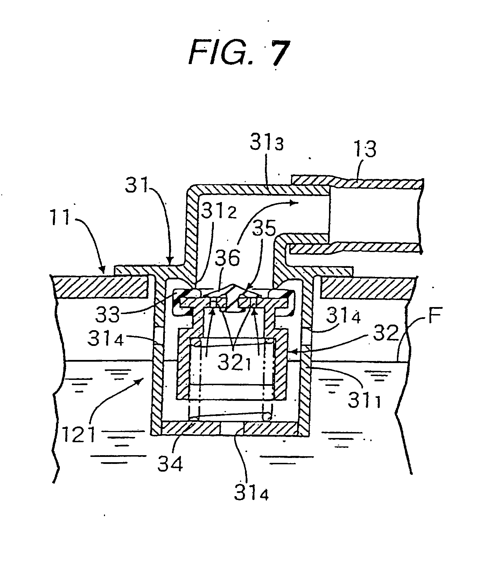

Now, description will be given below of a first modification of the previous float valve with reference to Fig. 7.

In the present modification, on the upper wall of the float 32, there is disposed a check valve 35. This check valve 35 is structured such that the upper surfaces of small holes $32_1$ ---, which are respectively formed so as to extend through the upper wall of the float 32, are covered by a valve body 36 consisting of an elastic body; and, in case where the jet pump 19 is operated while the float valve 121 is closed, the check valve 35 can be opened due to a negative pressure generated in the breather pipe 13. As a result.of this, the air existing within the float 32 is sucked out therefrom and thus the fuel liquid surface within the float 32 is raised from $L_1$ to $L_2$ to thereby reduce the buoyancy of the float 32; that is, due to the reduced buoyancy, the float 32 sinks down and thus the valve body 33 is separated from the valve seat $31_2$, so that the interior portion of the breather pipe 13 is brought into communication with the upper space of the tank main body 11 to thereby stop the generation of the negative pressure. Especially, since, in the oil or fuel supply operation, after the float 32 rises and thus the float valve 121 is closed, the small holes $32_1$ --- of the float 32 are covered by the valve body 36, the air can be prevented from flowing into the breather pipe 13 to thereby be able to raise the fuel liquid surface within the filler pipe 12 quickly, which makes it possible to operate the automatic stop mechanism of the oil supply gun G positively.

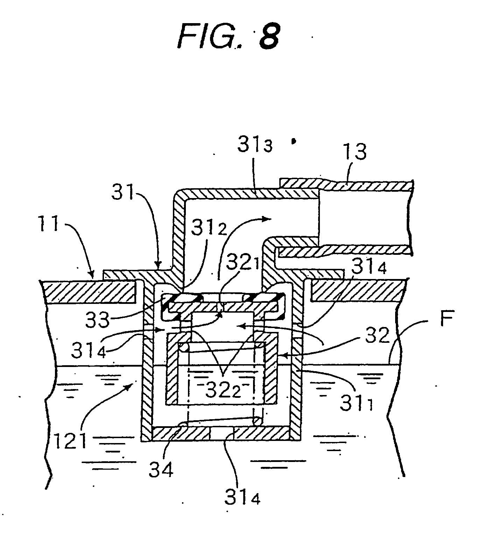

Now, description will be given below of a second modification of the float valve with reference to Fig. 8.

In the present modification, on the side walls of the float 32, there are respectively formed communicating holes $32_2$, $32_2$. Due to formation of the communicating holes $32_2$, $32_2$ on the side walls of the float 32, in case where the jet pump 19 is actuated while the float valve 21 is closed, the air existing in the upper space of the tank main body 11 can be sucked into the breather pipe 13 through communicating holes $31_4$, $31_4$ formed in the float chamber $31_1$, communicating holes $32_2$, $32_2$ formed on the side walls of the float 32, and small holes $32_1$ --- of the float 32. Therefore, while the float 32. remains held at its closed position, it is possible to prevent the negative pressure from being generated in the interior portion of the breather pipe 13. That is, in the present modification as well, there can be obtained similar operation and effects to the previously described embodiment shown in Fig. 6.

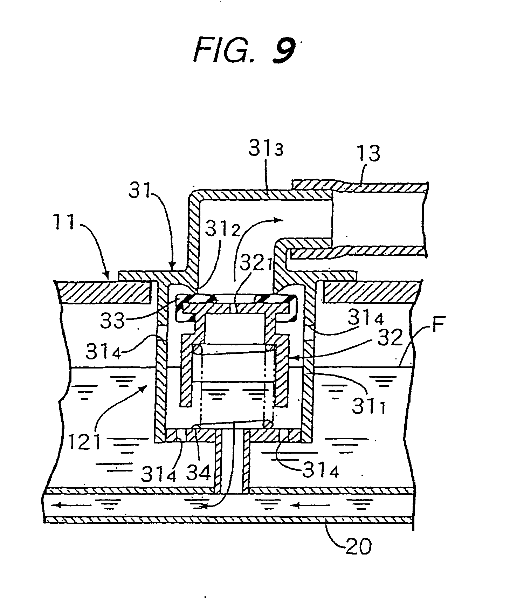

Now, description will be given below of another float valve for use in the present invention with reference to Fig. 9.

In the present embodiment, the intermediate portion of the stored fuel suction pipe 20 is formed so as to communicate with the lower portion of the float chamber $31_1$ of the float valve 121. In case where the jet pump 19 is actuated while the float valve 121 is closed, the fuel within the float chamber $31_1$ of the float valve 121 is sucked out therefrom by a negative pressure generated in the stored fuel suction pipe 20 to thereby cause the fuel liquid surface within the float chamber $31_1$ to lower, so that the float 32 sinks down to thereby open the float valve 121. Accordingly, it is possible to prevent the negative pressure from being generated in the interior portion of the breather pipe 13. That is, in the present embodiment as well, there can be obtained similar operation and effects to the previously described embodiment shown in Fig. 6.

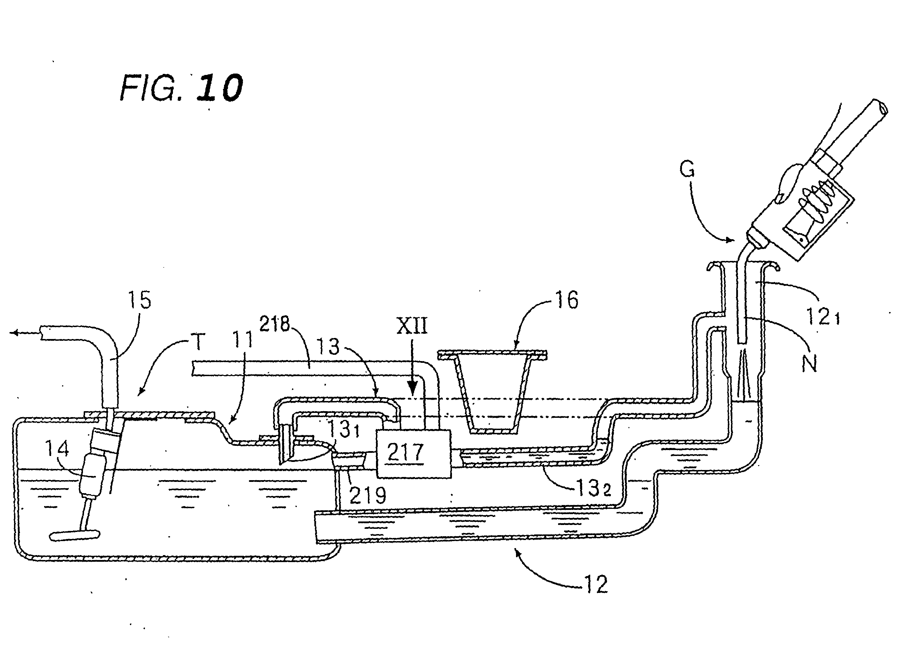

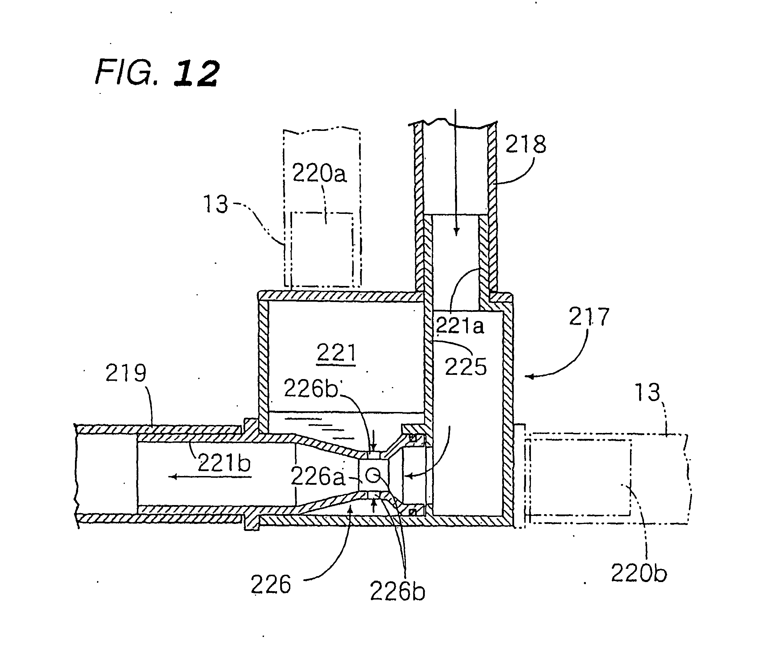

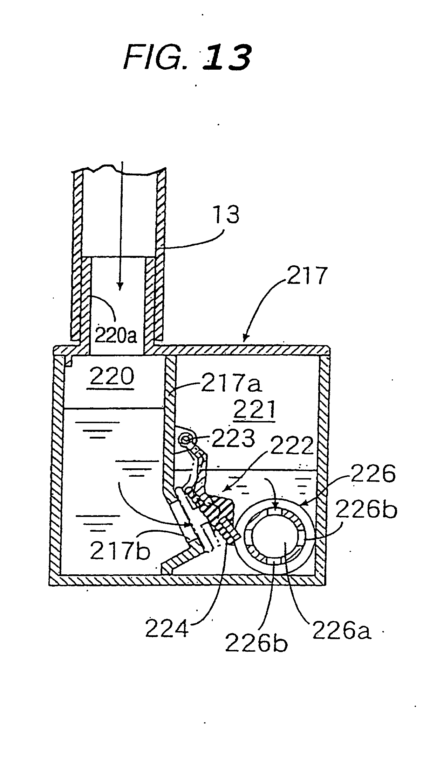

Now, description will be given below of the fourth embodiment of the invention with reference to Figs. 10 - 13.

As shown in Fig. 10, in the downwardly curved portion $13_1$ of a breather pipe 13, there is disposed a breather chamber 217. The breather chamber 217 is connected through a first return pipe 218 to a fuel injection device disposed in an engine and also is connected through a second return pipe 219 to a tank main body 11.

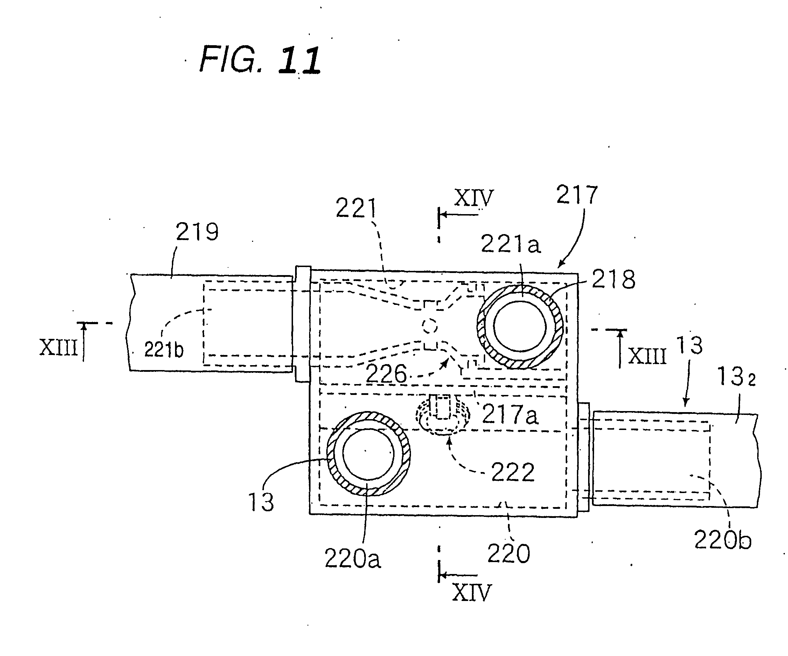

As can be seen from Figs. 11 to 13, the breather chamber 217 is composed of a rectangular-shaped vessel, while the interior portion of the breather chamber 217 is divided by a partition wall 217a into a first chamber 220 and a second chamber 221. In the upper wall of the first chamber 220, there is formed a breather passage inlet 220a which communicates with the tank main body 11 through the breather pipe 13; and, in the side wall of the first chamber 220, there is formed a breather passage outlet 220b communicating with a filler pipe 12 through the breather pipe 13. On the other hand, in the upper wall of the second chamber 221, there is formed a return fuel inlet 221a which communicates through the first return pipe 218 to the fuel injection device of the engine; and, in the side wall of the second chamber 221, there is formed a return fuel outlet 221b communicating through the second return pipe 219 with the tank main body 11. And, the height of the breather passage outlet 220b communicating with the first chamber 220 is set identical with the height of the downwardly curved portion $13_2$ of the breather pipe 13 and, therefore, fuel stored in the downwardly curved portion $13_2$ is allowed to flow into the first chamber 220.

A check valve 222, which is disposed on the partition wall 17a separating the first and second chambers 220 and 221 from each other, includes a valve body 224 which is supported in such a manner that it can be freely swung through a fulcrum pin 223; and, the valve body 224 is energized due its own weight to thereby be able to close a valve hole 217b, which is formed so as extend through the partition wall 217a, from the second chamber 221 side. The check valve 222 allows the fuel to move from the first chamber 220 side to the second chamber 221 side and prevents the movement of the fuel from the second chamber 221 side to the first chamber 220 side.

In the interior portion of the second chamber 221, the return fuel inlet 221a and return fuel outlet 221b are connected to each other through a connecting pipe 225 and a jet pump 226. The jet pump 226 includes a Venturi nozzle 226a which is formed by narrowing the passage of the fuel and, in the Venturi nozzle 226a, there are formed a plurality of openings 226b --- which respectively communicate with the interior portion of the second chamber 221.

Next, description will be given below of the operation of the embodiment of the invention having the above-mentioned structure.

In case where fuel vapor within the breather pipe 13 is liquefied, in some cases, the liquefied fuel can be stored in the downwardly curved portion $13_2$ of the breather pipe 13 and in the first chamber 220 of the breather chamber 217. Or, in case where fuel within the tank main body 11 is oscillated as a car runs, the fuel can flow from a communicating port $13_1$ through the breather pipe 13 into the first chamber 220 of the breather chamber 217.

When surplus fuel is returned through the first and second return pipes 218 and 219 to the tank main body 11 as the engine operates, the fuel passes through the Venturi nozzle 226a of the jet pump 226 disposed in the interior portion of the second chamber of the breather chamber 217, which is connected between the first and second return pipes 218 and 219, and there is generated a negative pressure when the fuel passes through the Venturi nozzle 226a; and, therefore, fuel within the second chamber 221 is sucked through the openings 226b --- due to the thus generated negative pressure and is thereby returned through the second return pipe 219 to the tank main body 11.

In case where the fuel within the second chamber 221 is discharged therefrom in this manner, the interior portion of the second chamber 221 becomes negative in pressure to thereby open the check valve 222, so that the fuel stored in the downwardly curved portion $13_2$ of the breather pipe 13 and in the first chamber 220 of the breather chamber 217 is allowed to pass through the check valve 222 and flow into the second chamber 221. And, finally, the fuel stored in the downwardly curved portion $13_2$ of the breather pipe 13 and in the first chamber 220 of the breather chamber 217 is discharged from the second chamber 221 into the tank main body 11, so that the upper space of the tank main body 11 is allowed to communicate through the breather pipe 13 with the filler pipe 12 without being interrupted by the stored fuel.

Due to this, when supplying fuel using an oil supply gun G, the downwardly curved portion $13_2$ of the breather pipe 13 can be held in a state where no fuel stays therein any longer, thereby allowing smooth oil supply into the tank main body 11, which makes it possible to positively avoid the unnecessary operation of the automatic stop mechanism of the oil supply gun G.

Also, since the breather chamber 217 is disposed on the outside of the tank main body 11, when compared with a case in which the breather chamber 217 is disposed in the interior portion of the tank main body 11, the maintenance thereof is easy, the freedom of the layout thereof is enhanced, and the breather chamber 217 can be post-attached easily to the ready-made fuel tank T.

Although description has been given heretofore of the respective embodiments of a fuel tank according to the invention, the invention is not limited to them, but various changes and modifications in design are also possible without departing from the subject matter of the invention.

For example, the invention can also be applied to fuel tanks which are used in other uses than the car. Also, in the illustrated embodiments, the jet pump 19 is disposed on the return pipe 18 but this is not limitative, for example, in case where the jet pump 19 is disposed on the feed pipe 15, there can also be obtained a similar effect.

Further, the fuel tank of the invention can also be applied to fuel tanks which are used in other uses than the car. Also, the specific structure of the check valve 222 and the specific structure of the jet pump 226 are not limited to those employed in the illustrated fourth embodiment, but they can be changed properly according to cases.

. As has been described hereinbefore, according to the first aspect of the invention, even in case where fuel is stored in the downwardly curved portion of the breather pipe due to the liquefaction of fuel vapor or due to the oscillatory motion of the fuel tank, the thus stored fuel can be returned back to the tank main body by the pump. Thanks to this, there is eliminated a fear that, in the fuel supply operation, the upper space of the tank main body can be hermetically closed by the thus stored fuel to thereby raise the fuel liquid surface within the filler pipe, and there is also eliminated a fear that, in the fuel supply operation, the fuel stored in the downwardly curved portion of the breather pipe can be pushed out to the oil supply port of the filler pipe due to an increase in the pressure of the upper space of the tank main body. This can prevent the unnecessary operation of the automatic stop mechanism of the oil supply gun.

In addition, according to a preferred embodiment of the invention, since the height of the fuel injection port formed in the jet pump is set almost coincident with the height of the fuel-filled-up surface, when supplying oil or fuel while the jet pump is not in operation, it is possible to prevent the fuel from flowing reversely from the fuel injection port through the stored fuel suction pipe to the downwardly curved portion of the breathe pipe, so that early operation of the automatic stop mechanism of the oil supply gun due to closing of the breather pipe can be prevented. Also, while the float valve is closed, the upper space of the tank main body and filler pipe are prevented from communicating with each other through the fuel injection port of the jet pump, stored fuel suction pipe and breather pipe, whereby a fuel liquid surface within the filler pipe is raised to thereby be able to positively operate the automatic stop mechanism of the oil supply gun.

Also, according to a still further preferred embodiment of the invention, on the stored fuel suction pipe, there is disposed a check valve which, when the jet pump generates a given suction force, can be opened to thereby allow suction of the air existing in the upper space of the tank main body. Therefore, when the jet pump is actuated in a state where the fuel liquid surface reaches the fuel-filled-up liquid surface and the float valve is thereby closed, the check valve is opened to thereby be able to prevent an excessive negative pressure from occurring in the breather pipe. This disables the fuel liquid surface within the filler pipe from rising. Thanks to this, not only, when the fuel cap is opened, the fuel can be prevented from being jetted out from the oil support port of the filler pipe, but also, when the fuel cap is not closed completely, there is eliminated a possibility that a large quantity of air can be sucked from the oil supply port into the tank main body, so that deterioration of a canister can be controlled.

Further, according to a yet further preferred embodiment of the invention, when the jet pump is actuated while the float valve is closed, the air existing in the upper portion of the tank main body can be sucked into the breather pipe, thereby being able to prevent an excessive negative pressure from occurring in the breather pipe. This disables the fuel liquid surface within the filler pipe from rising. Thanks to this, not only, when the fuel cap is opened, the fuel can be prevented from being jetted out from the oil support port of the filler pipe, but also, when the fuel cap is not closed completely, there is eliminated a possibility that a large quantity of air can be sucked from the oil support port into the tank main body, so that deterioration of the canister can be controlled.

In addition, according to another preferred embodiment of the invention, the intermediate portion of the stored fuel suction pipe is formed so as to communicate with the float valve, and closing of the float valve can be regulated by the negative pressure applied onto the stored fuel suction pipe due to operation of the jet pump. Thanks to this, when the jet pump is operated in a state where the fuel liquid surface reaches the fuel-filled-up liquid surface and the float valve is thereby closed, the float valve can be forcibly opened to prevent an excessive negative pressure from occurring in the breather pipe. This can prevent the fuel liquid surface within the filler pipe. from rising. Therefore, not only, when the fuel cap is opened, the fuel can be prevented from being jetted out from the oil support port of the filler pipe, but also, when the fuel cap is not closed completely, there is eliminated a possibility that a large quantity of air can be sucked from the oil support port into the tank main body, so that deterioration of the canister can be controlled.

Moreover, according to a further preferred embodiment of the invention, even in case where fuel is stored in the downwardly curved portion of the breather pipe due to liquefaction of fuel vapor or due to oscillation of the fuel tank, the fuel is allowed to flow from the first chamber through the check valve into the seconde chamber, where the fuel can be sucked by the jet pump and thus can be returned into the tank main body. Therefore, there are eliminated the possibility that, in the fuel supply operation, the upper space of the tank main body can be closed by the above-mentioned stored fuel to thereby raise the fuel liquid surface within the filler pipe, and the possibility that, in the fuel supply operation, the fuel stored in the downwardly curved portion of the breather pipe can be pushed out to the oil supply port of the filler pipe due to an increase in the pressure of the upper space of the tank main body. This can avoid the possibility that the automatic stop mechanism of the oil supply gun can be operated unnecessarily.

The fuel tank T includes a breather pipe 13. In the intermediate portion of the breather pipe 13, there is formed a downwardly curved portion $13_2$ which is used to avoid the interference of the breather pipe 13 with a car body frame 16, and, in the one end portion of the breather pipe 13, there is disposed a float valve 21. A jet pump 19, which can be operated by fuel returned from an engine, is connected to the downwardly curved portion $13_2$ of the breather pipe 13 by a stored fuel suction pipe 20, so that fuel stored in the downwardly curved portion $13_2$ can be sucked and discharged due to the operation of the jet pump 19.

**Claims**

1. A fuel tank, comprising:

   a tank main body (11) for storing fuel therein;
   a filler pipe (12) having one end communicating with the lower space of said tank main body (11) and the other end formed with an oil supply port ($12_1$) into which an oil supply gun (G) can be inserted;
   a breather pipe (13) having one end communicating with the upper space of said tank main body (11) and the other end communicating with said oil supply port ($12_1$) of said filler pipe (12), said breather pipe (13) including a downwardly curved portion ($13_2$) formed in the intermediate portion thereof;

   **characterized in that** said fuel tank further comprises:

   a pump (19) returning fuel stored in said downwardly curved portion ($13_2$) of said breather pipe (13) to said tank main body (11) through a stored fuel suction pipe (20).

2. A fuel tank according to claim 1, further comprising:

   a float valve (121) disposed on one end of said breather pipe (13), said float valve (121) being closed, when a fuel liquid surface within said tank main body (11) reaches a fuel-filled-up surface (F),

   wherein the height of a fuel injection port ($19_2$) formed in said pump (19) is set substantially coincident with the height of said fuel-filled-up surface (F).

3. A fuel tank according to claim 1, further comprising:

   a float valve (121) disposed on one end of said breather pipe (13), said float valve (121) being closed, when a fuel liquid surface within said tank main body (11) reaches a fuel-filled-up surface (F), and
   a check valve (122) disposed on said stored fuel suction pipe (20), said check valve (122) being opened when said pump (19) generates a given suction force to thereby allow suction of the air existing in said upper space of said tank main body (11).

4. A fuel tank according to claim 1, further comprising:

   a float valve (121) disposed on one end of said breather pipe (13), said float valve (121) being closed, when a fuel liquid surface within said tank main body (11) reaches a fuel-filled-up surface (F);
   a communication path (127) communicating said fuel main body (11) with an intermediate portion of said breather pipe (13) between said float valve (121) and said downwardly curved portion ($13_2$) thereof; and
   a check valve (122) disposed on said communication path (127), said check valve (122) being opened when said pump (19) generates a given suction force to thereby allow suction of the air existing in said upper space of said tank main body (11).

5. A fuel tank according to claim 1, further comprising:

   a float valve (121) disposed on one end of said breather pipe (13), said float valve (121) being closed, when a fuel liquid surface within said tank main body (11) reaches a fuel-filled-up surface (F),

   wherein, when said pump (19) is actuated while said float valve (121) is closed, the air existing in said upper portion of said tank main body (11) can be sucked into said breather pipe (13).

6. A fuel tank according to claim 5, wherein said float valve (121) includes:

   a valve housing (31) defining a float chamber ($13_1$), said valve housing (31) communicating with said breather pipe (13) in an upper portion thereof and having a valve seat ($31_2$) formed in the upper portion thereof;
   a float (32) accommodating within said float chamber ($13_1$) so as to be vertically movable, said float (32) having a valve body (33) on an upper end thereof such as to be seated on said

valve seat ($31_2$), said float (32) having a small hole ($32_1$) on the upper end thereof; and a spring (34) disposed between said float (32) and a bottom surface of said valve housing (31) such as to support a part of the weight of said float (32),

wherein, when said pump (19) is actuated while said float valve (121) is closed, the air existing in said upper portion of said tank main body (11) can be sucked into said small hole ($32_1$) of said breather pipe (13).

7. A fuel tank according to claim 1, further comprising:

a float valve (121) disposed on one end of said breather pipe (13), said float valve (121) being closed, when a fuel liquid surface within said tank main body (11) reaches a fuel-filled-up surface (F),

wherein the intermediate portion of said stored fuel suction pipe (20) is formed so as to communicate with said float valve (121), and the closing of said float valve (121) is regulated by a negative pressure applied onto said stored fuel suction pipe (20) due to operation of said pump (19).

8. A fuel tank according to claim 7, wherein said float valve (121) includes:

a valve housing (31) defining a float chamber ($13_1$), said valve housing (31) communicating with said breather pipe (13) in an upper portion thereof and having a valve seat ($31_2$) formed in the upper portion thereof; a float (32) accommodating within said float chamber ($13_1$) so as to be vertically movable, said float (32) having a valve body (33) on an upper end thereof such as to be seated on said valve seat ($31_2$), said float (32) having a small hole ($32_1$) on the upper end thereof; and a spring (34) disposed between said float (32) and a bottom surface of said valve housing (31) such as to support a part of the weight of said float (32).

9. A fuel tank according to claim 1, **characterized in that** it further comprises:

a first chamber (220) communicating with said downwardly curved portion ($13_2$) of said breather pipe (13); a second chamber (221) communicating with said first chamber (220); a check valve (222) for allowing the movement of fuel from said first chamber (220) to said second chamber (221) and preventing the movement of said fuel from said second chamber (221) to said first chamber (220);

wherein said pump is a jet pump (226) disposed on return pipes (218, 219) respectively for returning the surplus fuel of an engine to said tank main body (11), said jet pump (226) being capable of sucking fuel existing within said second chamber (221).

**Patentansprüche**

1. Kraftstofftank, umfassend:

einen Tankhauptkörper (11) zum aufbewahren von Kraftstoff; ein Befüllungsrohr (12), das ein Ende aufweist, das mit dem unteren Raum des Tankhauptkörpers (11) in Verbindung steht, während das andere Ende mit einer Ölzuführungsöffnung ($12_1$) versehen ist, in das eine Ölzuführungspistole (G) eingeführt werden kann; ein Belüftungsrohr (13), das ein Ende aufweist, das mit dem oberen Raum des Tankhauptkörpers (11) in Verbindung steht, wobei das andere Ende mit der Ölzuführungsöffnung ($12_1$) des Befüllungsrohres (12) in Verbindung steht, und wobei das Befüllungsrohr (13) einen nach unten gekrümmten Abschnitt ($13_2$) enthält, der in dessen Zwischenabschnitt ausgebildet ist;

**dadurch gekennzeichnet, dass** der Kraftstofftank ferner umfasst:

eine Pumpe (19), die den im nach unten gekrümmten Abschnitt ($13_2$) des Belüftungsrohres (13) abgelagerten Kraftstoff durch ein Ablagerungskraftstoffansaugrohr (20) in den Tankhauptkörper (11) zurückführt.

2. Kraftstofftank nach Anspruch 1, ferner umfassend:

ein Schwimmerventil (121), das an einem Ende des Belüftungsrohres (13) angeordnet ist, wobei das Schwimmerventil (121) geschlossen wird, wenn ein Kraftstoffflüssigkeitsspiegel innerhalb des Tankhauptkörpers (11) einen Tank-Voll-Spiegel (F) erreicht,

wobei die Höhe einer Kraftstoffeinspritzöffnung ($19_2$), die in der Pumpe (19) ausgebildet ist, im wesentlichen in Übereinstimmung mit der Höhe des Tank-Voll-Spiegels (F) festgelegt ist.

3. Kraftstofftank nach Anspruch 1, ferner umfassend:

ein Schwimmerventil (121), das an einem Ende des Belüftungsrohres (13) angeordnet ist, wobei das Schwimmerventil (121) geschlossen wird, wenn ein Kraftstoffflüssigkeitsspiegel innerhalb des Tankhauptkörpers (11) einen Tank-Voll-Spiegel (F) erreicht, und

ein Rückschlagventil (122), das am Ablagerungskraftstoffansaugrohr (20) angeordnet ist, wobei das Rückschlagventil (122) geöffnet wird, wenn die Pumpe (19) eine gegebene Saugkraft erzeugt, um somit das Ansaugen der im oberen Raum des Tankhauptkörpers (11) befindlichen Luft zu erlauben.

4. Kraftstofftank nach Anspruch 1, ferner umfassend:

ein Schwimmerventil (121), das an einem Ende des Belüftungsrohres (13) angeordnet ist, wobei das Schwimmerventil (121) geschlossen wird, wenn ein Kraftstoffflüssigkeitsspiegel innerhalb des Tankhauptkörpers (11) einen Tank-Voll-Spiegel (F) erreicht;

einen Verbindungsweg (127), der den Tankhauptkörper 11 mit einem Zwischenabschnitt des Belüftungsrohres 13 zwischen dem Schwimmerventil 121 und dessen nach unten gekrümmten Abschnitt ($13_2$) verbindet; und

ein Rückschlagventil (122), das am Verbindungsweg (127) angeordnet ist, wobei das Rückschlagventil geöffnet wird, wenn die Pumpe (19) eine gegebene Saugkraft erzeugt, um somit das Ansaugen der im oberen Raum des Tankhauptkörpers (11) befindlichen Luft zu erlauben.

5. Kraftstofftank nach Anspruch 1, ferner umfassend:

ein Schwimmerventil (121), das an einem Ende des Belüftungsrohres (13) angeordnet ist, wobei das Schwimmerventil (121) geschlossen wird, wenn ein Kraftstoffflüssigkeitsspiegel innerhalb des Tankhauptkörpers (11) einen Tank-Voll-Spiegel (F) erreicht,

wobei dann, wenn die Pumpe (19) betätigt wird, während das Schwimmerventil (121) geschlossen ist, die im oberen Abschnitt des Tankhauptkörpers (11) befindliche Luft in das Belüftungsrohr (13) gesaugt werden kann.

6. Kraftstofftank nach Anspruch 5, bei dem das Schwimmerventil (121) enthält:

ein Ventilgehäuse (31), das eine Schwimmerkammer ($13_1$) definiert, wobei das Ventilgehäuse (31) mit dem Belüftungsrohr (13) in einem oberen Abschnitt desselben in Verbindung steht und einen Ventilsitz ($31_2$) aufweist, der in dessen oberem Abschnitt ausgebildet ist;

einen Schwimmer (32) der in der Schwimmerkammer ($13_1$) aufgenommen ist, so dass er vertikal beweglich ist, wobei der Schwimmer (32) einen Ventilkörper (33) an seinem oberen Ende aufweist, so dass er auf dem Ventilsitz ($31_2$) aufsitzt, wobei der Schwimmer (32) ein kleines Loch ($32_1$) an seinem oberen Ende aufweist; und

eine Feder (34), die zwischen dem Schwimmer (32) und einer Bodenoberfläche des Ventilgehäuses (31) angeordnet ist, um somit einen Teil des Gewichts des Schwimmers (32) zu tragen;

wobei dann, wenn die Pumpe (19) betätigt wird, während das Schwimmerventil (121) geschlossen ist, die im oberen Abschnitt des Tankhauptkörpers (11) befindliche Luft in das kleine Loch ($32_1$) des Belüftungsrohres (13) gesaugt werden kann.

7. Kraftstofftank nach Anspruch 1, ferner umfassend:

ein Schwimmerventil (121), das an einem Ende des Belüftungsrohres (13) angeordnet ist, wobei das Schwimmerventil (121) geschlossen wird, wenn ein Kraftstoffflüssigkeitsspiegel innerhalb des Tankhauptkörpers (11) einen Tank-Voll-Spiegel (F) erreicht,

wobei der Zwischenabschnitt des Ablagerungskraftstoffansaugrohres (20) so geformt ist, dass er mit dem Schwimmerventil (121) in Verbindung steht, wobei das Schließen des Schwimmventils (121) durch den Unterdruck reguliert wird, der aufgrund der Operation der Pumpe (19) auf das Ablagerungskraftstoffansaugrohr (20) ausgeübt wird.

8. Kraftstofftank nach Anspruch 7, bei dem das Schwimmerventil (121) enthält:

ein Ventilgehäuse (31), das eine Schwimmerkammer ($13_1$) definiert, wobei das Ventilgehäuse (31 ) mit dem Belüftungsrohr (13) in einem oberen Abschnitt desselben in Verbindung steht und einen Ventilsitz ($31_2$) aufweist, der in dessen oberem Abschnitt ausgebildet ist;

einen Schwimmer (32) der in der Schwimmerkammer ($13_1$) aufgenommen ist, so dass er vertikal beweglich ist, wobei der Schwimmer (32) einen Ventilkörper (33) an seinem oberen Ende aufweist, so dass er auf dem Ventilsitz ($31_2$) aufsitzt, wobei der Schwimmer (32) ein kleines Loch ($32_1$) an seinem oberen Ende aufweist; und

eine Feder (34), die zwischen dem Schwimmer (32) und einer Bodenoberfläche des Ventilgehäuses (31) angeordnet ist, um somit einen Teil des Gewichts des Schwimmers (32) zu tragen.

9. Kraftstofftank nach Anspruch 1, **dadurch gekennzeichnet, dass** er ferner umfasst:

eine erste Kammer (220), die mit dem nach unten gekrümmten Abschnitt ($13_2$) des Belüftungsrohres (13) in Verbindung steht;
eine zweite Kammer (221), die mit der ersten Kammer (220) in Verbindung steht;
ein Rückschlagventil (222), um die Bewegung des Kraftstoffes von der ersten Kammer (220) zur zweiten Kammer (221) zu erlauben und die Bewegung des Kraftstoffes von der zweiten Kammer (221) zur ersten Kammer (220) zu verhindern;

wobei die Pumpe eine Strahlpumpe (226) ist, die an den Rückführungsrohren (218, 219) angeordnet ist, die jeweils überschüssigen Kraftstoff einer Maschine zum Tankhauptkörper (11) zurückführen, wobei die Strahlpumpe (226) fähig ist, den innerhalb der zweiten Kammer (221) befindlichen Kraftstoff anzusaugen.

**Revendications**

1. Réservoir de carburant, comprenant :

un corps principal de réservoir (11) pour y stocker du carburant ;
un tuyau de remplissage (12) ayant une extrémité communiquant avec l'espace inférieur dudit corps principal de réservoir (11) et l'autre extrémité formée d'un orifice d'acheminement de carburant ($12_1$) dans lequel un pistolet d'acheminement de carburant (G) peut être inséré ;
un reniflard (13) ayant une extrémité communiquant avec l'espace supérieur dudit corps principal de réservoir (11) et l'autre extrémité communiquant avec ledit orifice d'acheminement de carburant ($12_1$) dudit tuyau de remplissage (12), ledit reniflard (13) comprenant une partie courbée vers le bas ($13_2$) formée dans la partie intermédiaire de celui-ci ;

**caractérisé en ce que** ledit réservoir de carburant comprend en outre :

une pompe (19) ramenant le carburant stocké dans ladite partie courbée vers le bas ($13_2$) dudit reniflard (13) vers ledit corps principal de réservoir (11) par l'intermédiaire d'un tuyau d'aspiration de carburant stocké (20).

2. Réservoir de carburant selon la revendication 1, comprenant en outre :

un clapet à flotteur (121) disposé sur une extrémité dudit reniflard (13), ledit clapet à flotteur (121) étant fermé lorsqu'une surface liquide de carburant dans ledit corps principal de carburant (11) atteint une surface remplie de carburant (F),

dans lequel la hauteur d'un orifice d'injection de carburant ($19_2$) formé dans ladite pompe (19) coïncide sensiblement avec la hauteur de ladite surface remplie de carburant (F).

3. Réservoir selon la revendication 1, comprenant en outre :

un clapet à flotteur (121) disposé sur une extrémité dudit reniflard (13), ledit clapet à flotteur (121) étant fermé lorsqu'une surface liquide de carburant dans ledit corps principal de réservoir (11) atteint une surface remplie de carburant (F), et
un clapet de non-retour (122) disposé sur ledit tuyau d'aspiration de carburant stocké (20), ledit clapet de non-retour (122) étant ouvert lorsque ladite pompe (19) génère une force d'aspiration donnée afin de permettre l'aspiration de l'air existant dans ledit espace supérieur dudit corps principal de réservoir (11).

4. Réservoir de carburant selon la revendication 1, comprenant en outre :

un clapet à flotteur (121) disposé sur une extrémité dudit reniflard (13), ledit clapet à flotteur (121) étant fermé lorsqu'une surface liquide de carburant dans ledit corps principal de réservoir (11) atteint une surface remplie de carburant (F) ;
un chemin de communication (127) faisant communiquer ledit corps principal de réservoir (11) avec une partie intermédiaire dudit reniflard (13) entre ledit clapet à flotteur (121) et ladite partie courbée vers le bas (132) de celui-ci ; et
un clapet de non-retour (122) disposé sur ledit chemin de communication (127), ledit clapet de non-retour (122) étant ouvert lorsque ladite pompe (19) génère une force d'aspiration donnée afin de permettre l'aspiration de l'air existant dans ledit espace supérieur dudit corps principal de réservoir (11).

5. Réservoir de carburant selon la revendication 1, comprenant en outre :

un clapet à flotteur (121) disposé sur une extrémité dudit reniflard (13), ledit clapet à flotteur (121) étant fermé lorsqu'une surface liquide de carburant dans ledit corps principal de réservoir (11) atteint une surface remplie de carburant (F),

dans lequel, lorsque ladite pompe (19) est actionnée alors que ledit clapet à flotteur (121) est fermé, l'air existant dans ladite partie supérieure dudit corps principal de réservoir (11) peut être aspiré dans ledit reniflard (13).

6. Réservoir de carburant selon la revendication 5, dans lequel ledit clapet à flotteur (121) comprend :

un boîtier de clapet (31) définissant une chambre à flotteur ($13_1$), ledit boîtier de clapet (31) communiquant avec ledit reniflard (13) dans une partie supérieure de celui-ci et ayant un siège de clapet ($31_2$) formé dans la partie supérieure de celui-ci ;
un flotteur (32) logé dans ladite chambre à flotteur ($13_1$) de façon à être mobile verticalement, ledit flotteur (32) ayant un corps de clapet (33) sur une extrémité supérieure de celui-ci de façon à être placé sur ledit siège de clapet ($31_2$), ledit flotteur (32) comportant un petit trou ($32_1$) sur l'extrémité supérieure de celui-ci ; et
un ressort (34) disposé entre ledit flotteur (32) et une surface inférieure dudit boîtier de clapet (31) de façon à supporter une partie du poids dudit flotteur (32),

dans lequel, lorsque ladite pompe (19) est actionnée alors que ledit clapet à flotteur (121) est fermé, l'air existant dans ladite partie supérieure dudit corps principal de réservoir (11) peut être aspiré dans ledit petit trou ($32_1$) dudit reniflard (13).

7. Réservoir de carburant selon la revendication 1, comprenant en outre :

un clapet à flotteur (121) disposé sur une extrémité dudit reniflard (13), ledit clapet à flotteur (121) étant fermé lorsqu'une surface liquide de carburant dans ledit corps principal de réservoir (11) atteint une surface remplie de carburant (F),

dans lequel la partie intermédiaire dudit tuyau d'aspiration de carburant stocké (20) est formée de façon à communiquer avec ledit clapet à flotteur (121), et la fermeture dudit clapet à flotteur (121) est régulée par une pression négative appliquée sur ledit tuyau d'aspiration de carburant stocké (20) en raison du fonctionnement de ladite pompe (19).

8. Réservoir de carburant selon la revendication 7, dans lequel ledit clapet à flotteur (121) comprend :

un boîtier de clapet (31) définissant une cham-

bre à flotteur ($13_1$), ledit boîtier de clapet (31) communiquant avec ledit reniflard (13) dans une partie supérieure de celui-ci et ayant un siège de clapet ($31_2$) formé dans la partie supérieure de celui-ci ;
un flotteur (32) logé dans ladite chambre à flotteur ($13_1$) de façon à être mobile verticalement, ledit flotteur (32) ayant un corps de clapet (33) sur une extrémité supérieure de celui-ci de façon à être placé sur ledit siège de clapet ($31_2$), ledit flotteur (32) comportant un petit trou ($32_1$) sur l'extrémité supérieure de celui-ci ; et
un ressort (34) disposé entre ledit flotteur (32) et une surface inférieure dudit boîtier de clapet (31) de façon à supporter une partie du poids dudit flotteur (32).

9. Réservoir de carburant selon la revendication 1, **caractérisé en ce qu'**il comprend en outre :

une première chambre (220) communiquant avec ladite partie courbée vers le bas ($13_2$) dudit reniflard (13) ;
une seconde chambre (221) communiquant avec ladite première chambre (220) ;
un clapet de non-retour (222) destiné à permettre le déplacement du carburant de ladite première chambre (220) vers ladite seconde chambre (221) et à empêcher le déplacement dudit carburant de ladite seconde chambre (221) vers ladite première chambre (220) ;

dans lequel ladite pompe est une pompe à jet (226) disposée sur des tuyaux de retour (218, 219) respectivement pour ramener le surplus de carburant d'un moteur vers ledit corps principal de réservoir (11), ladite pompe à jet (226) étant capable d'aspirer le carburant existant dans ladite seconde chambre (221).

FIG. 1

FIG. 2

EP 1 068 980 B1

FIG. 3

FIG. 4

FIG. **5**

EP 1 068 980 B1

# FIG. 6

FIG. 7

FIG. 8

FIG. **9**

FIG. 10

FIG. 11

FIG. 12

## FIG. 13

FIG. **14**

FIG. **15**

EP 1 068 980 B1